# EUROPEAN PATENT SPECIFICATION

(11) **EP 3 928 845 B1**
(45) Date of publication and mention of the grant of the patent: **25.11.2026**
(21) Application number: 21180961.1
(22) Date of filing: 27.04.2016
(51) Int. Cl.: A63F 13/48, A63F 13/795, A63F 13/85

(54) **INTERACTIVE EVENTS PLATFORM**
PLATTFORM FÜR INTERAKTIVE VERANSTALTUNGEN
PLATE-FORME D'ÉVÉNEMENTS INTERACTIVE

(30) Priority: 27.04.2015 US 201562153444 P
(43) Date of publication of application: 29.12.2021
(62) Document number(s) of the earlier application(s) in accordance with Art. 76 EPC: 16787094.8 / 3 288 651
(73) Proprietor: Sony Interactive Entertainment LLC, San Mateo, CA 94404 (US)
(72) Inventor: Webb, Jon, California, 94404 (US)
(74) Representative: Gill Jennings & Every LLP

(56) References cited:
- WO-A1-2009/073801
- US-A1- 2007 191 101
- US-A1- 2008 167 124
- US-A1- 2013 321 268
- US-A1- 2014 349 758

## Description

### CROSS-REFERENCE TO RELATED APPLICATIONS

The present application claims the priority benefit of U.S. provisional application number 62/153,444 filed April 27, 2015 and entitled "Interactive Events Platform and System".

### BACKGROUND

### Field of Invention

The present invention generally relates to in-game events. More specifically, the present invention relates to an interactive events platform and system for hosting in-game events and notifying users of the availability and means to engage with the same.

### Description of the Related Art

The amount of time a user may spend playing a video game generally follows an expected pattern. The amount of time the user initially devotes to playing the game is typically greater than the time the user devotes to game play several weeks or months later. There may be many reasons that contribute to this decline in the amount of time dedicate to game play. For example, a user may complete the tasks or challenged offered by the game and the user sees no additional reason to engage in game play. The user may also become less interested or bored with the game because game play has become repetitive or due to inability to overcome certain challenges. The story line of a particular game may also be unsatisfactory to the particular tastes of the user. Further, there exist a number of games already on the market and new games are constantly being introduced that may divert the interests of the user.

In view of the challenge to retain user interest with respect to a particular game as long as possible, some game publishers or game platform providers may implement in-game events. In-game events are time-limited activities that introduce special or different game play elements. There are a variety of different types of in-game events that can be implemented.

For example, some time-limited events may introduce a story-related event or game-related challenge that further expands on the existing game and in which the users can participate. Other events may introduce some sort of bonus or benefit for joining the time-limited such as being able to acquire additional experience, resources (*e.g*., in-game currency), or loot (*e.g*., items or equipment/gear). These in-game events aim to maintain the interest of users for a prolonged period of time. In some instances, such events may be helpful in drawing older users back to the game after these older users have stopped playing for a prolonged period of time.

In-game events are also a way for companies to keep users engaged with a particular game thereby building long-time loyalty for the game, franchise, published, or game platform. User loyalty can be converted into free advertisement by way of word-of-mouth or other viral activity and increased sales by way of new users being introduced to a game by way of a friend.

As users remain invested in the game, a publisher, service provider, or platform can take advantage of opportunities to increase retention with the game. As described above, newer users may be drawn to the game from existing users because of the in-game event, which can result in team-based or clan-based game play. This may also have the benefit of reducing the number of 'used' game sales that might deprive a publisher of controlling after-market sales or otherwise dilute of a brand. Such retention may also allow publishers to provide events that include opportunities for current users playing the game to buy add-on or additional content (*i.e.* expansions) or obtain access to subsequent titles at an early date.

From a user perspective, in-game events are enjoyable because they introduce new experiences and challenges. In-game events also motivate friends to join and experience the event as well. Events like these also make a user feel that their purchasing dollar has been well spent and helps create an affinity to a brand, publisher, or platform, which in turn allows for the generation of future content, experiences, and events that may further keep the user happy with the purchase thereby creating a self-perpetuating cycle of content and game play loyalty.

In-game events may be problematic, however, in that unless the user is actively engaged with the game, these in-game event opportunities may be missed with respect to when the in-game events actually occur. For example, users may opt to receive messages (*e.g*., e-mail or texts) regarding special in-game events associated with a game. Other games provide notification of in-game events to the users within the operation of the game (*e.g*., as a part of a title screen, waiting room, or main menu). The former option may generate notifications that can potentially be viewed as unwanted text or e-mail traffic from users that may subsequently be dismissed as spam or lost amongst a series of other communications. With the latter instance, if the user is not actively following a particular game, then the user may not encounter the title screen or menu screen providing information as to when in-game events may occur (*e.g*., currently or in the future).

Also problematic is the fact that even if the user remembers that an in-game event is occurring, there may be confusion as to how the user can participate. For example, the in-game event may require that the user perform a certain task, participate in a particular mode of gameplay, or be in a certain location within the game at a certain time, and so forth. Certain credentials or a special password may also be required. It should be noted that users may also be engaged in numerous in-game events over multiple games that are currently being played by the user. Citations include WO 2009/073801 A1 related to system for reporting recorded video preceding system failures; and US 2007/191101 A1 related to a game console tournament method.

There is a need in the art for a system that not only discovers and notifies the user of in-game events, but also provides an easy way for the user to engage with the same.

### SUMMARY OF THE PRESENTLY CLAIMED INVENTION

Embodiments of the present disclosure are defined by the appended set of claims.

### BRIEF DESCRIPTION OF THE DRAWINGS

FIGURE 1 A and FIGURE 1B illustrate an events destination interfaces.
FIGURE 2 illustrates a detailed events interface.
FIGURE 3 illustrates an interface for event discovery.
FIGURE 4 illustrates a registration screen for an in-game event.
FIGURE 5 illustrates a live broadcast interface.
FIGURE 6 illustrates an exemplary system for implementing an interactive events platform.
FIGURE 7 illustrates various tournament interfaces.
FIGURE 8 is a block diagram of an exemplary electronic entertainment system.

### DETAILED DESCRIPTION

Embodiments of the present invention concern implementing an interactive events platform. The interactive events platform may discover current in-game events associated with different video games currently available (or active). The platform may further notify a user of the discovered in-game events associated with different video games and facilitate the user joining a particular in-game event. The interactive events platform may also discover and notify the user of future in-game events associated with different video games. In some embodiments, the discovery and notification of any in-game events are based on games currently being played (or registered) with the user. The environment facilitates user awareness and participation with respect to in-game events. Through better implementation of in-game event awareness, increased user participation may be recognized and companies or platforms can more easily maintain a prolonged interest in the game for many users over a longer period of time.

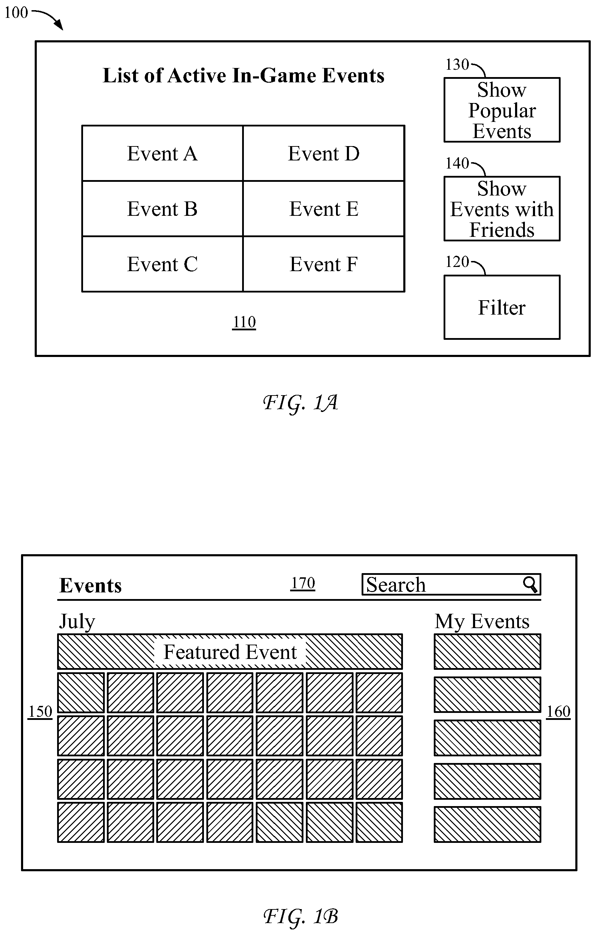

FIGURE 1A and FIGURE 1B illustrate event destination interfaces **100.** With reference to FIGURE 1A, the events destination interface **100** may be initially displayed with the interactive events platform or be viewable via menu elements (*e.g*., 'events'). The events destination interface **100** of FIGURE 1 includes a list of all in-game events currently active **110.** In some embodiments, this list may correlate instead to the respective game titles currently owned, rented, or otherwise in active play by the user. The user can customize or filter the list **110** to identify those games currently owned, rented, or otherwise in active play via a filter option **120.** The user can also include games on the list **110** in which the user is interested in following but does not currently own, rent, or otherwise actively play. This list **110** may also include future in-game events associated with the aforementioned game titles associated with the user.

The features of the events destination interface can be implemented over different devices (*e.g*., other gaming consoles, mobile devices, desktops) that are also capable of running games. In other embodiments, the events destination interface is also implementable via computing devices that are not associated with gaming or have gaming capabilities (*e.g*., a smart watch).

With the events destination interface **100,** general information about the events may also be included that further facilitates advertising for a particular game. For example, with the list of all in-game events that are currently active, the events destination interface **100** may include a ranking of popular events based on how many different users are currently participating in the particular event **130.** Acquaintances within the game (*e.g*., teammates, guild mates, rivals) or real-life friends of the user who are currently participating in an in-game event may also be listed **140.** In other embodiments, the list of other users may also include a more popularly received in-game event may be a catalyst that encourages newer users to buy the game in order to experience the popular in-game event.

In an alternate embodiment, the events destination interface **100** may appear as illustrated in FIGURE 1B. In this alternate embodiment, the events destination interface 100 includes a calendar **150** that includes information about the various in-game events. For example, a calendar for the current month may include indication of what in-game events are currently active or will be active within that month. Users may be allowed to view future months to see any in-game events planned later in the year as well. A list of user in-game events may be provided **160** on the events destination interface **100.** This list of user-in game events **160** may include a list of in-game events that the user is participating in, registered for or at least interested in participating.

The user may also be allowed to search for or filter the variety of in-game events illustrated on the calendar **150.** The user can filter, via search options **170** associated with the events destination interface **100.** By entering in, for example, the name of the game or the title of the event, the events destination interface **100** may provide a list of related in-game events for the user to view (not shown).

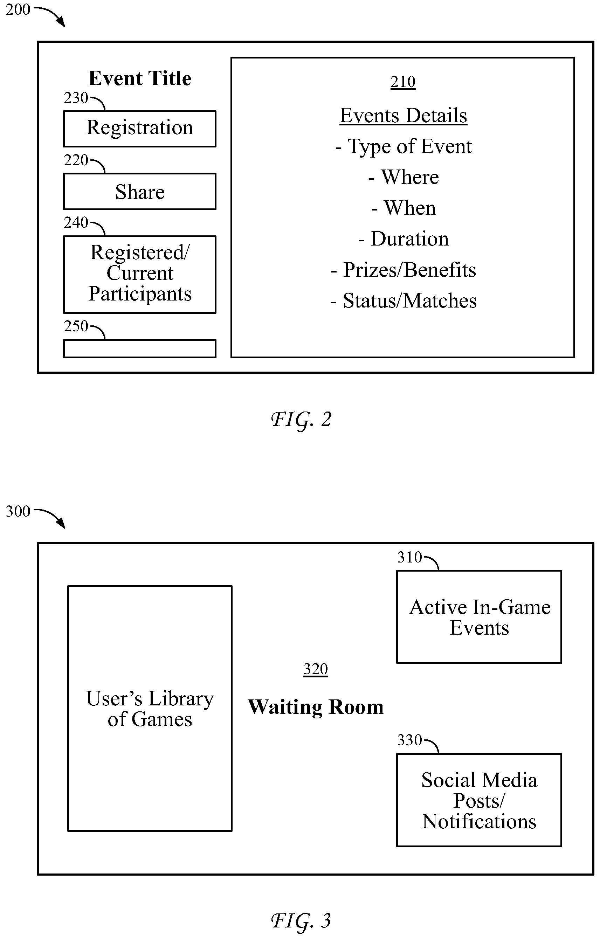

FIGURE 2 illustrates a detailed events interface **200.** This interface **200** can be obtained through user selection of one of the listed in-game events displayed on the events destination interface **100** of FIGURE 1. The detailed events interface **200** may provide a variety of different information associated with the selected in-game event. For example, the detailed events interface **200** will include specific details **210** regarding the in-game event; specific details that include the title of the event, pre-requisites (if any) for joining the in-game event, prizes/loot that can be acquired, description of the type of in-game event that will be hosted, where the in-game event will be hosted (*e.g*., in-game location, particular gameplay mode) as well as when (*e.g*., date and time) and how long (*e.g*., duration) the in-game event will occur for.

The displayed detailed information about an event may not be static. In some embodiments, this detailed information can be modified and updated as required. For example (and as described in further detail below), some events may include tournaments that includes competition between users or teams of users. Tournaments may typically have set matches that need to be completed. The detailed information can include information about upcoming matches and would be updated based on results from completed matches.

The detailed events interface **200** may also include other features aside from details regarding the in-game event. For example, features may allow a user to 'share' **220** the information about the in-game event with other users (*e.g*., friends). Features may also allow a user to register **230** for the event. Registration may include indicating an intention to participate with respect to the in-game event but may also include a willingness to receive notifications and reminders about the event via, for example, text or email). When registration for an event is allowed, a list of users who have registered for the event **240** may be displayed for the user to view. This list may highlight, for example, any users that are on the user's friends list.

The act of registering for the in-game event may be requested or required for some in-game events if the in-game event has a maximum number of allowed participants (*e.g*., user player cap). For example, a player cap may be implemented for an in-game event that is being hosted as a competition or tournament where various users can compete against each other individually or in teams to achieve prizing (*e.g*., in-game resources, loot) and/or a ranking. The user player cap may be implemented for a variety of reasons such as ensuring that the tournament can be completed within a reasonable time or to ensure that servers associated with the game can efficiently carry out the in-game event without causing significant problems (*e.g*., network processing).

As noted above, the detailed events interface **200** may include information regarding how many different users have registered for the in-game event **240.** The detailed events interface **200** may also include information regarding how many users (and the identity of the same) are currently participating in the in-game event. The list of different users currently participating in the in-game event may also include a list of users (*e.g*., friends, guild/clan members) that the user can view. The list of users that have registered **240** or are currently participating in the in-game event can provide the user an understanding as to how popular a certain in-game event may be.

The detailed events interface **200** may also provide a start/launch option **250.** Said option may facilitate entry into the in-game event. For example the option **250** may include a user selectable button labeled 'Launch' or 'Start.'

Although the detailed event interface **200** provides information about where the in-game event may be hosted, users may not be immediately clear on where to go in order to participate in the in-game event. Therefore, the start/launch option **250** may assist in streamlining user entry into the in-game event. In particular, the start/launch option **250** is customized for each in-game event and may also include custom features associated with the specific user participation in the in-game event.

For example, selection of the start/launch option **250** when the user is playing alone may only automatically initiate the game and set up the game play environment (*e.g*., select the appropriate game mode or transport the user's character to the appropriate location) so that the user can begin participating in the in-game event. In contrast, a plurality of users utilizing the start/launch option **250** in an in-game event that is a tournament would facilitate match making and setting up corresponding features (*e.g*., parties, team-chat, peripherals such as microphones) with the other users.

As noted above, the start/launch option **250** facilitates setting up the game environment for the user. In an embodiment where the user may decide to participate in an in-game event with one or more friends, selection of the start/launch option **250** may place the user within the game and establish a new party with the user's one or more friends who may already be within the game participating with the in-game event. Alternatively, if a party is already formed within the game, the user may be added automatically (or a request be automatically sent to a party leader to request the addition of the user to the existing party). It should be noted that the start/launch option **250** may require additional input from the user, for example, indicating the friend(s) the user wishes to participate in the in-game event with.

The start/launch option **250** may be implemented by the developer and carried out by the interactive events platform. In particular, the developer may implement corresponding instructions that would instruct a game being initiated by the user to generate a corresponding game environment associated with the in-game event. When the user selects the start/launch option **250,** the interactive events platform may use the instructions provided by the developer to have the user's game streamline the user's entry into the in-game event.

It should be noted, however, that the start/launch option **250** may not always be implemented by the developer for their in-game events. In situations where such an option is not used, user selection of the option **250** may merely initiate the game. Once the game is initiated, the user may be required to navigate to the appropriate environment (*e.g*., game location, mode) where the in-game event is occurring. The existence of the start/launch option **250** is provided so that developers can assist the user in participating with the in-game event.

The information regarding various in-game events may be removed or deleted from the events destination interface and/or the interactive events platform once the particular in-game event has expired. By removing or deleting expired events, the list of in-game events can be kept up-to-date with current events and not include the clutter that arises if expired events still occupy the same list. Information about past events, however, does not need to be completely deleted or removed from the events destination interface. Past in-game event information may be kept in a separate list that users can reference again at a later date.

For example, an in-game event may include a tournament involving a predetermined number of players. Information about the tournament (*e.g*., audio/video recordings, results, statistics) may be stored in memory so that users who missed the in-game event can still search and obtain the information (*e.g*., view match recordings) about that expired event. The in-game event information may be stored in a separate location (*e.g*., servers) distinct from where the game is run (*e.g*., game computing devices), the network facilitating the interactive event platform and/or the client device. Furthermore, the list of expired events may be kept separate from the list of current in-game events. In this way, the interactive events platform can still maintain the current available in-game events without cluttering the list with expired events.

FIGURE 3 illustrates an interface for event discovery **300.** As noted above, users may easily miss or overlook the existence of current in-game events associated with various games. Some in-game events may provide notifications during interactions with the particular game (*e.g*., main menu, waiting room, title screen). Embodiments of the present invention facilitate user discovery of in-game events more so than what currently exists in the art.

For example, notifications regarding when an in-game event is available can be published in a number of locations that provides more visibility to various users. Aside from interactions with the game, the notifications **310** can be associated with a main menu or lobby **320** for the events destination interface **300.** The main menu or lobby **320** can correspond to an area associated with the computing device (*e.g*., game console) that includes features that connects the user to various games (*e.g*., games the user currently owns). Through this embodiment, the user would not need to enter a particular game to discover what in-game events exist.

In other embodiments of the present invention, notifications can also be provided to the user via social media **330.** By voluntarily choosing to 'follow' a particular game via social media (*e.g*., Facebook, Twitter), the developer for the game may provide notifications via social media **330** about current and upcoming in-game events that users can receive and view. These social media posts/notifications can be viewable, for example, in the main menu or lobby **320.**

Discovery for current in-game events can also be provided to the user via notification of other user participation and/or registration with an in-game event. Other users (*e.g*., friends) associated with the user can provide status updates for the user to view. These updates for the user may be triggered based on, for example, a friend registering or playing in an in-game event for a game that the user currently is playing.

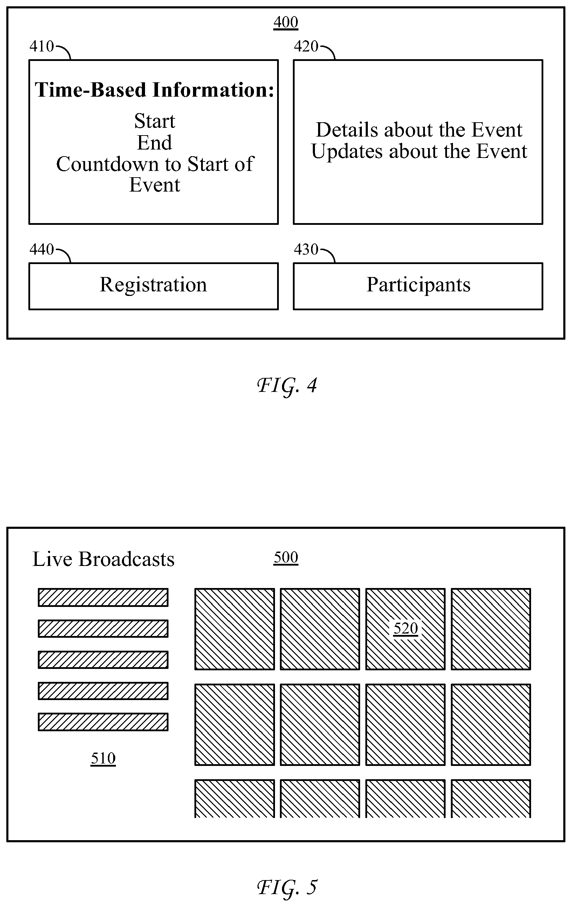

Some in-game events may request or require that the user register for the in-game event in order to participate. In some cases, users may be requested to pre-register for the event in advance of the start of the in-game event. FIGURE 4 illustrates a registration screen for an in-game event **400.**

The registration screen for an in-game event **400** may be obtained, for example, via the registration button **230** of the detailed events interface **200** of FIGURE 2. The registration screen **400** may include similar information provided on the detailed events interface **200.** Such information includes any time-based information **410** that could include one or more of the following: a start date/time, an end date/time, a remaining time left for the event and a countdown to the start of the event.

The registration screen **400** may include similar if not the same detailed information about the in-game event **420.** This detailed information may similarly include details about the events and the rewards/benefits for joining the event. A list of registered users **430** for the event may also be shown. An emphasis on the user's friends may be provided such that they are shown first or are highlighted in the list of registered users **430.** In some embodiments, the user's friends can be located in a separate list.

The registration screen **400** would also include a user-selectable feature **440** that would carry out the user registration for the in-game event. For example, upon selection of the feature **440,** the user's account could be listed as being registered for the event, be eligible to participate in the event (if registration is required) once the in-game event begins and receive notifications, reminders and updates regarding the in-game event. This type of registration may be a "default" way of registering for an event.

As noted above, it may be possible to provide notifications and reminders to the user for those events where the user has registered. These notifications may include a countdown until the in-game event starts, the time and place corresponding to the start of the in-game event and countdown to when the in-game event ends.

Notifications can be provided from the interactive events platform to the user via their computing device/game console. These notifications may pop up when the user is using the corresponding game console/computing system. Notifications can also be provided as text messages or emails. The user would be allowed to specify how the reminders can be received (*e.g*., text, emails, popups) as well as where the reminders should be provided to (*e.g*., game console, smartphone, desktop/laptop).

Once the user has registered for an event using the registration screen, the system may identify the user as being registered (*e.g*., via a special mark/symbol). This status of being registered for the in-game event can be subsequently provided by the system to the game computing device (*e.g*., game client, game server).

The developer may be allowed to provide customized registration to be completed by users in order to register for an event. In this way, games may have different ways to register for an event. For example, a developer or a tournament organizer may request additional information about the user. This information can be used to determine eligibility to join the in-game event. This determination of eligibility can be performed on the developer side, by the system or by both. The developer or tournament organizer may provide, for example, guidelines for the system to use to help evaluate whether a user is eligible for the in-game event (*e.g*., tournament). In this way, the registration for in-game events can be streamlined by both the game computing device and the network computing device.

With reference to the interface for event discovery discussed above with FIGURE 3, user registration for an in-game event using the registration screen of FIGURE 4 may also trigger notification of the registration to other users. For example, the user may provide notifications to all their friends that they had just registered for an event. This type of notification, in response to registration, can be used to spread awareness of a particular in-game event.

The notifications that are received by the user via e-mail or as text are capable of including the same sort of information as provided in the above detailed events interface. The notifications may include details regarding the name of the event, description of the in-game event, the start time, the end time and the location of the in-game event. This notification would be useful as a reminder so that the user does not forget to participate in the in-game event, especially in situations where the user pre-registered for the event in advance.

Notifications received while on the gaming console may pop up and indicate to the user that the in-game event is about to begin or has begun. The pop-up notification may include a user selectable option that allows the user to automatically participate in the in-game event if selected. This option would allow the user to leave whatever the user is currently doing (*i.e.* playing one game) and enter into a different game corresponding with the in-game event. Alternatively, the pop up notification may forward the user to the detailed event interface for the specific in-game event referenced in the notification. From there, as discussed above, the start/launch option could be selected to streamline the user's participation in the in-game event.

FIGURE 5 illustrates a live broadcast interface **500.** In an embodiment of the present invention, where an in-game event includes live broadcast (*e.g*., discussion with developers, on-going tournament), the start/launch option may bring up a live broadcast interface **500.** The live broadcast interface **500** may include a list of games **510** that currently have live broadcasts **520** available for the user to view. These broadcasts may include developers talking about the particular game or players currently playing the game (*i.e.* streamers) who elect to share their in-game gameplay experience for other users to view.

In other embodiments, this live broadcast interface **500** may also include past recordings of broadcasts **520** available for the user to view. The past recordings of broadcasts **520** may be stored, for example, in memory (*e.g*., archives) associated with the live broadcast interface **500.** These past recordings can be retrieved by users and viewed on demand. In still further embodiments, these past recordings may also be provided to other destination (*e.g*., Youtube, Twitch) where users can also view the past recordings using different platforms and devices.

The broadcasts that are viewable by users through the live broadcast interface 500 may be organized any number of ways. For example, the broadcasts **520** may be organized, as described above, by games **510.** The broadcasts **520** may also be arranged by users or by popularity. Once a particular game is selected from the list of games **510,** the live broadcast interface **500** will display the various live broadcasts (or streams) associated with the selected game. The user can select a particular stream and begin viewing the live broadcast.

When the user is navigated to the live broadcast interface **500,** the user automatically leaves or, alternatively, pauses whatever activity in which the user was previously engaged (*e.g*., playing a different game). Upon selection of a live broadcast 520, the live broadcast can be displayed for the user to view, for example, via a pop-up. Once the user is finished with viewing the live broadcast **520,** some embodiments of the present invention may allow the user to resume where the user left off before.

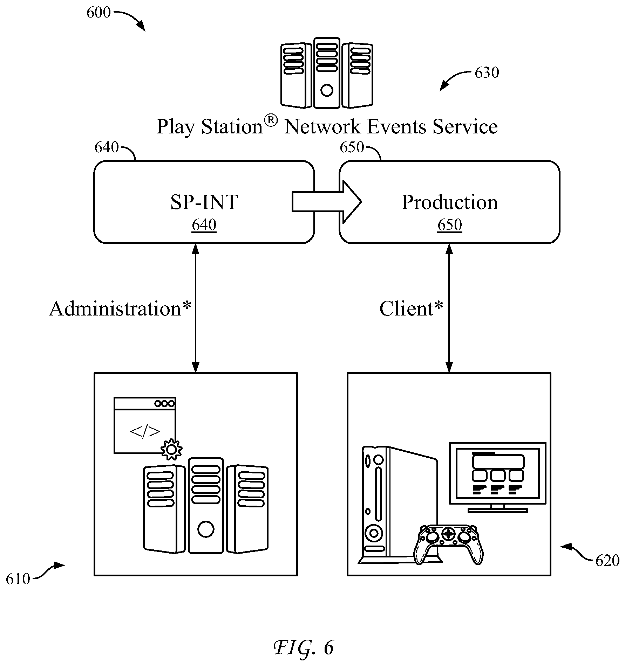

FIGURE 6 illustrates an exemplary system **600** for implementing an interactive events platform. The system **600** includes one or more game computing devices (*i.e.* servers) **610** associated with carrying out the particular game, one or more client computing devices **620** from where users will be participating in the in-games events from, and one or more network computing devices **630** for facilitating the game experience for the user between the gaming computing devices **610** and client computing devices **620.** As described herein, the computing devices (*e.g*., game, client, and network) may include any known computing devices. These computing devices may include any number of processors and memory to carry out their respective instructions. Exemplary computing devices may include, for example, desktops, laptops, mobile devices (*e.g*., smartphones), tablets and game consoles (*e.g*., PlayStation 4).

With the system **600,** as illustrated in FIGURE 6, developers associated with the game may have various game computing devices **610** for their respective games. Generally processes for the game involving only one player (*e.g*., single player campaigns) can be performed on the respective client computing device **620.** When the game involves multiple users over an online feature, however, the game computing devices **610** may be used to facilitate the various connections between the multiple players via a common online game environment. The game computing devices **610** may also host the online environment(s) where the multiple players would participate in the in-game event.

The network computing devices **630** facilitate the discovery, notification and streamlining of the in-game events between the users (via the client computing devices **620**) with the game (via the game computing devices **610**). Whenever a developer, via the game computing devices **610,** provides information about an in-game event to the network computing devices **630,** the information can be forwarded to the user at the client computing devices **620.** When a user indicates that he/she would like to participate in an in-game event via their client computing device **620,** the network computing device **630** forwards the information to the game computing device **610.** Furthermore, the network computing device **630** may perform various additional processes to facilitate streamlining the user experience when beginning the in-game event.

Although further details regarding how in-game event information is provided to the network computing device **630** from, for example, the developer is provided below, it should be noted that the network computing device **630** includes a development (or service provider integration **640**) feature and a production **650** feature associated with the in-game events.

The service provider integration feature **640** allows users (*e.g*., developers) to test whether aspects of the in-game event are compatible with the interactive events platform. For example, the service provider integration feature **640** can be used to ensure that information about the in-game event appears properly on the detailed events interface. Developers can customize how such information appears and what information is displayed. Furthermore, developers can test interactions with the computing devices of the system **600** (carried out, for example, through corresponding code) to ensure that a user is capable of entering an in-game event smoothly (*e.g*., initiating the game properly). Once the tests have been carried out and the in-game event is ready, developers can use the production feature **650** to release the in-game event to the public. Release of the in-game event to the public may refer to providing the in-game event information to the interactive events platform (via the network computing device **630**) even though the event itself may not begin until later.

To facilitate the development of in-game events and how they interact with the interactive events platform, the present invention provides a plurality of application programming interfaces (APIs) associated with the network computing device **630** that developers can use to develop how the in-game event operates with the interactive events platform and provide the information to be used by the interactive events platform.

In-game event data may include event metadata that provides the details for the in-game event that will be displayed, for example, on the detailed event interface. Developers provide the in-game event data, via their game computing devices **610** using the APIs associated with the network computing devices **630.** The APIs facilitate developers in populating the different types of information for the in-game event to the interactive events platform. Such information include how the information is displayed, the start/end dates, duration, what details are provided about the event and rewards, registration processes and streamlining (*e.g*., autoboot) of the in-game event using the start/launch option described above.

This information associated with the in-game events can be updated and modified as needed. In some embodiments, users may need authorization to populate and/or modify aspects of in-game events. For example, if a developer would like to populate information and/or modify information for in-game event, an authorized user account would need to be used. This may be incorporate to ensure that events are properly hosted by recognized game developers. In contrast, if a single user would like to create and/or modify an in-game event for a few friends or acquaintances, an authorized user account may not be needed. Alternatively, there may be different types of user accounts that dictate what type of events can be created.

As noted above, in-game events may be generated by a single user. These in-game events may be associated for a smaller group of users (*e.g*., acquaintances, friends) associated with a particular task or challenge to complete within the game. The group of users may be public (*i.e.* open invitation) or private (*i.e.* limited to the identified users in the in-game event). A user can schedule a time where various other users would all play the game at the same time with the user.

In order to carry out the creation of this in-game event for the user and the user's friends, the user would create the in-game event and provide information regarding the in-game event to the network computing device. This user-created in-game event can then be developed and published to the user's friends in a similar manner as the developer created in-game events. It should be noted that the user may or may not have access to the same APIs that developers can use to create and publish their in-game events. In some embodiments, users may have different APIs than the ones usable by developers. In some cases, from the view of the user's friends, the interactive events platform may provide distinguishing marks (*e.g*., symbol, text color) that can be used to distinguish between a user created in-game events from a developer created in-game events.

As noted above, the network computing device **630** can facilitate streamlining the user participation (via their respective client computing devices **620**) with the in-game events (via the game computing devices **610**). As noted above, the interactive events platform (*e.g*., detailed events interface) allows the user to initiate the in-game event via a start/launch option. The network computing device **630** provides this functionality to games through the use of APIs that allows the developer to provide instructions directed at automatically setting up the user's game experience. For example, the user's game, once initiated, can be instructed to establish a game environment related to the in-game event.

If the in-game event involves the user playing with other users (*e.g*., friends) whom the user would like to play with, the generated instructions may identify these other users and update the game computing device so that the user and these other users can join the same in-game event. In some embodiments, these generated instructions for the game to generate a gaming environment where these users are within the same party at the in-game event. In other embodiments, peripherals (*e.g*., microphones, cameras) or other in-game features (*e.g*., group chat) may also be initiated so that the user has access to these automatically once the user is able to participate in the in-game event.

As an embodiment of the present invention, the interactive events platform is usable with respect to E-sports and tournaments. Generally, e-sports are organized multiplayer video game competitions between players involving one or more games of various genres such as FPS (first person shooters), MOBAs (multiplayer online battle arena), strategy and fighting games. These competitions may incorporate live broadcasts as well as include prizes. Example games active in the E-sports scene include games from the Call of Duty and Street Fighter franchises. The present invention would be incorporated into the E-sports and tournament scene by streamlining organization and management of the event.

As an example, the interactive events platform may be used to generate an in-game event specific to the tournament. Although some tournaments (*e.g*., smaller scale) may be generated by users or companies associated with a particular game, other tournaments (*e.g*., larger scale) may be restricted to specific companies/partners (*e.g*., Intel Extreme Masters, Evolution Championship Series) that focus on hosting tournaments.

The network computing system **630** may also include other elements other than what is illustrated in FIGURE 6. For example, the network computing system **630** may include features for managing administrative user-related information on behalf of the game computing device **610.** For example, this user management feature can be directed towards processing and storing in-game event information that is displayed for the user to view, sending notifications for each user, and managing user information and social connections.

The network computing system **630** may also include features that helps manage the in-game events alongside the game computing device **610.** For example, these game management features may contain game server systems used to coordinate the in-game events alongside the game computing device **610.** In this way, the network computing system **630** can facilitate some game processes that would have been performed by the game computing device **610** such as score keeping and rewards. The game management features of the network computing system **630** can also include 'back-office' systems thereby facilitating a developer to administrate an in-game event using the network computing system **630.**

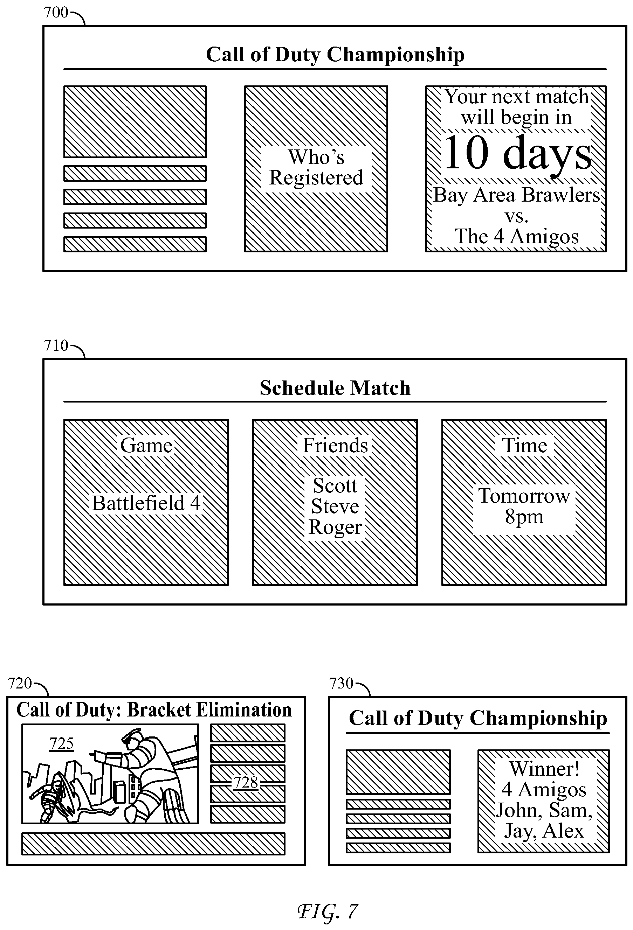

FIGURE 7 illustrate various tournament interfaces. In a first tournament interface **700,** information about the tournament may be displayed. Tournaments may specify particular players and/or teams that would be eligible to join. Furthermore, details regarding the matches (*e.g*., brackets) as well as a time frame in which the match should be completed would be included as well. Specific players and/or teams may register for the in-game event through the tournament interface.

In a second interface **710,** information regarding a match within the tournament can be provided. For example, information may include the game the tournament is for, who is participating in the tournament (*e.g*., team) as well as what time the match will occur. It should be noted that start/launch options can be included with the tournament interface **710** that would streamline the match making/pairing of the players or teams within the tournament if a bracket is involved. When the start/launch option is selected, the user and the user's teammates may automatically be initiated into the game and placed within the same game instance as the opponents based on the bracket. Otherwise, the pairing may be done based on other criteria (*e.g*., ranking) or randomly. In any case, the start/launch option could be used to ensure that the correct users are initiated into the correct instance of the game that includes the user's teammates and corresponding opponents. Corresponding features, such as team chat, could also be automatically enabled so that individual user setup is not needed prior to the start of the match.

A third tournament interface **720,** can be provided to allow users to view past or ongoing matches. This tournament interface **720** may include a past recording or live stream of the match **725.** Additional information **728** may also include the participants within the match as well as any game-related information of interest (*e.g*., statistics, status of each player). In some embodiments, comments from other users can be provided about the match. These comments can be displayed on this tournament interface **720** for viewing by other users.

Once a match is complete, processes may be included with the interactive events platform whereby results are obtained. Results are then used to update the in-game event information shown on the interactive event platform viewable by any number of users. In order to provide results for the interactive events platform, users may be required to submit a screen shot that illustrates who is the winner/loser of the match. In some embodiments, this result may be acquired automatically by the interactive events platform by evaluating game-based data (*e.g*., score, life left, status).

The interactive events platform, as described above, when used with E-Sports/tournaments would better automate the organization and management of the tournament. This reduces the need for administrators to manually pair players and/or teams within the game. Rather, the pairing and game set up is provided automatically via the interface using, for example, the tournament bracket that was initially provided with the in-game event set up.

Once updated, the tournament results can be viewed, for example, through the use of a fourth tournament interface **730.** The information about the results may include various statistics or details about the match, who was involved in the match as well as a past recording of the match. In some embodiments, this information may also be included in the detailed events interface for users to view as well.

Although the above description and figures describe embodiments of the interactive events platform usable in the realm of games, it should be noted that this platform is also usable outside games as well. For example, a similar embodiment could be used with business that would facilitate conference calls or meetings held via teleconference or video. Events (*e.g*., meetings) could be scheduled with an identified number of participants. These events could be provided notification of the event via a variety of different ways (*e.g*., email, text, pop-up on a computing device). The notification may include information regarding the event and provide a start/launch option that streamlines the user's access to the event (*e.g*., automatic setting up of the conference call/video conference) on the user's computing device.

It should be noted that the interactive events platform may be implemented in an application that may be operable using a variety of end user devices (*i.e.* computing devices). For example, an end user device may be a personal computer, a home entertainment system (*e.g*., Sony PlayStation4), a portable gaming device (e.g., Sony PSP), or a home entertainment system of a different manufacturer. The present methodologies described herein are fully intended to be operable on a variety of devices. The present invention may also be implemented with cross-title neutrality wherein an embodiment of the present system may be utilized across a variety of titles from various publishers.

These end user devices may include non-transitory computer-readable storage media. Such media refers to any medium or media that participate in providing instructions to a central processing unit (CPU) for execution. Such media can take many forms, including, but not limited to, non-volatile and volatile media such as optical or magnetic disks and dynamic memory, respectively. Common forms of non-transitory computer-readable media include, for example, a floppy disk, a flexible disk, a hard disk, magnetic tape, any other magnetic medium, a CD-ROM disk, digital video disk (DVD), any other optical medium, RAM, PROM, EPROM, a FLASHEPROM, and any other memory chip or cartridge.

Various forms of transmission media may be involved in carrying one or more sequences of one or more instructions to a CPU for execution. A bus carries the data to system RAM, from which a CPU retrieves and executes the instructions. The instructions received by system RAM can optionally be stored on a fixed disk either before or after execution by a CPU. Various forms of storage may likewise be implemented as well as the necessary network interfaces and network topologies to implement the same.

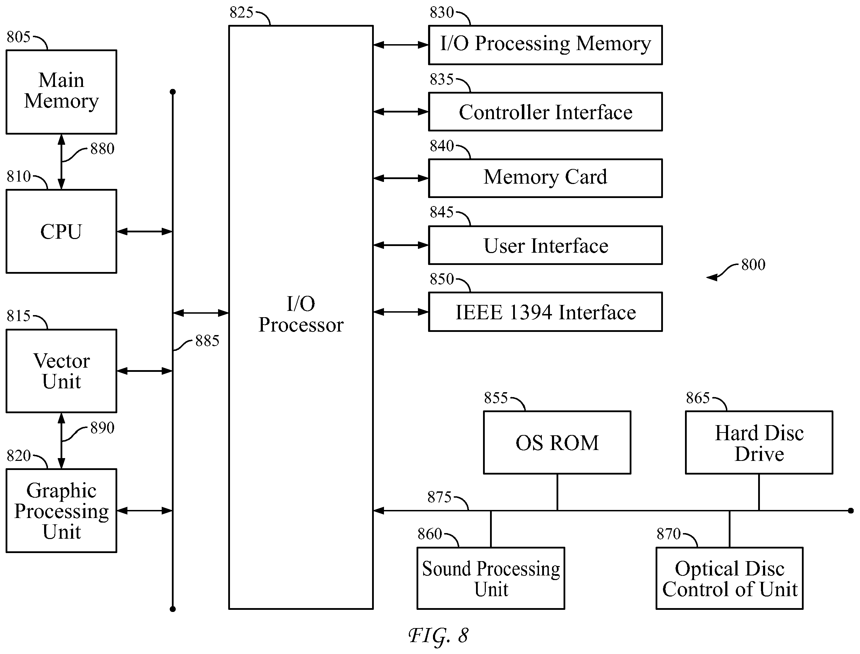

FIGURE 8 is a block diagram of an exemplary electronic entertainment system **800.** The entertainment system **800** of FIGURE 8 includes a main memory **805,** a central processing unit (CPU) **810,** vector unit **815,** a graphics processing unit **820,** an input/output (I/O) processor **825,** an I/O processor memory **830,** a controller interface **835,** a memory card **840,** a Universal Serial Bus (USB) interface **845,** and an IEEE 1394 interface **850.** The entertainment system **800** further includes an operating system read-only memory (OS ROM) **855,** a sound processing unit **860,** an optical disc control unit **870,** and a hard disc drive **865,** which are connected via a bus **875** to the I/O processor **825.**

Entertainment system **800** may be an electronic game console. Alternatively, the entertainment system **800** may be implemented as a general-purpose computer, a set-top box, a hand-held game device, a tablet computing device, or a mobile computing device or phone. Entertainment systems may contain more or less operating components depending on a particular form factor, purpose, or design.

The CPU **810,** the vector unit **815,** the graphics processing unit **820,** and the I/O processor 825 of FIGURE 8 communicate via a system bus **885.** Further, the CPU 810 of FIGURE 8 communicates with the main memory **805** via a dedicated bus **880,** while the vector unit **815** and the graphics processing unit **820** may communicate through a dedicated bus **890.** The CPU **810** of FIGURE 8 executes programs stored in the OS ROM **855** and the main memory **805.** The main memory **805** of FIGURE 8 may contain prestored programs and programs transferred through the I/O Processor **825** from a CD-ROM, DVD-ROM, or other optical disc (not shown) using the optical disc control unit **870.** I/O Processor **825** of FIGURE 8 may also allow for the introduction of content transferred over a wireless or other communications network (*e.g*., 4$, LTE, 3G, and so forth). The I/O processor **825** of FIGURE 8 primarily controls data exchanges between the various devices of the entertainment system **800** including the CPU **810,** the vector unit **815,** the graphics processing unit **820,** and the controller interface **835.**

The graphics processing unit **820** of FIGURE 8 executes graphics instructions received from the CPU **810** and the vector unit **815** to produce images for display on a display device (not shown). For example, the vector unit **815** of FIGURE 8 may transform objects from three-dimensional coordinates to two-dimensional coordinates, and send the two-dimensional coordinates to the graphics processing unit **820.** Furthermore, the sound processing unit **860** executes instructions to produce sound signals that are outputted to an audio device such as speakers (not shown). Other devices may be connected to the entertainment system **800** via the USB interface **845,** and the IEEE 1394 interface **850** such as wireless transceivers, which may also be embedded in the system **800** or as a part of some other component such as a processor.

A user of the entertainment system **800** of FIGURE 8 provides instructions via the controller interface **835** to the CPU **810.** For example, the user may instruct the CPU **810** to store certain game information on the memory card **840** or other non-transitory computer-readable storage media or instruct a character in a game to perform some specified action.

## Claims

1. A system (600) for providing an interactive events platform, the system comprising:
a game server (610) that hosts an active online event, the active online event being an in-game event and being associated with a content stream;
memory that stores information regarding the active online event, the stored information including a set of one or more event features associated with participation in the active online event;
a communication interface that communicates over a communication network, wherein the communication interface:
receives in-game event information from the game server, wherein the in-game event information includes instructions for customizing in-game event access based on user information;
sends a notification comprising the in-game event information to a plurality of client computing devices regarding the active online event, wherein the in-game event information appears on an events interface of the plurality of client computing devices, and
receives, in response to selection of a start / launch option of the events interface, a request from at least one of the client computing devices regarding access to participate in the active online event, and
a processor that executes instructions stored in memory, wherein execution of the instructions by the processor:
generates event instructions for the at least one requesting client computing device based on the set of event features associated with participation in the active online event, wherein execution of the event instructions by the requesting client computing device configures the requesting client computing device for streamlined access to the active online event in accordance with the associated set of event features;
launches an online environment of the content stream associated with the active online event, the online environment corresponding to the set of event features associated with participation in the active online event; and
automatically provides the requesting client computing device with the streamlined access to the online environment of the content stream based on the event instructions and in-game event information without requiring further action from the requesting client computing device, wherein automatically providing the requesting client computing device with the streamlined access includes initiating the set of event features within the online environment;
wherein the generated event instructions are further executable by the at least one requesting client computing device to set up a peripheral device for use during the active online event, and the selection of the start / launch option of the events interface triggers configuration of the peripheral device needed for the active online event via the generated event instructions.

2. The system of claim 1, wherein the processor further:
identifies one or more active online events available to each of the client computing devices; and
generate a customized list of the available active online events for a user of the at least one requesting client computing device, wherein the notification sent to the at least one client computing device is based on the corresponding customized list.

3. The system of claim 2, wherein the processor generates the customized list based on one or more indicators of interest from the user.

4. The system of claim 3, wherein the indicators of interest include at least one of registration by the user to indicate an intention to participate with respect to the active online event, participation by one or more designated friends or team members, and one or more designated titles of interest.

5. The system of claim 2, wherein each active online event in the customized list is associated with a link for the streamlined access, and wherein the processor launches the online environment based on user selection of the associated link for the active online event.

6. The system of claim 2, wherein the processor further generates a calendar display based on the customized list, wherein the calendar display indicates an activity status of each active online event on the customized list.

7. The system of claim 1, wherein the processor automatically provides the requesting client computing device with the streamlined access to the online environment by placing a point of view associated with a user of the at least one client computing device at a specified location within the online environment.

8. The system of claim 1, wherein the processor automatically provides the requesting client computing device with streamlined access to the online environment further based on one or more designated friends or team members with whom a user of the client computing device wishes to interact in the online environment.

9. The system of claim 1, wherein the active online event is a videoconference call, and wherein the generated event instructions are further executable by the at least one requesting client computing device to set up a group chat associated with the videoconference call.

10. A method for providing an interactive events platform, the method comprising:
hosting, at a game server (610), an active online event, the active online event being an in-game event and being associated with a content stream;
storing information in memory regarding the active online event, the stored information including a set of one or more event features associated with participation in the active online event;
receiving in-game event information from the game server, wherein the in-game event information includes instructions for customizing in-game event access based on user information;
sending a notification comprising the in-game information over a communication network to a plurality of client computing devices (620) regarding the active online event, wherein the in-game event information appears on an events interface of the plurality of client computing devices;
receiving, in response to selection of a start / launch option of the events interface, a request from at least one of the client computing devices regarding access to participate in the active online event; and
executing instructions stored in memory, wherein execution of the instructions by a processor:
generates event instructions for the at least one requesting client computing device based on the set of event features associated with participation in the active online event, wherein execution of the event instructions by the requesting client computing device configures the requesting client computing device for streamlined access to the active online event in accordance with the associated set of event features,
launches an online environment of the content stream associated with the active online event, the online environment corresponding to the set of event features associated with participation in the active online event, and
automatically provides the requesting client computing device with the streamlined access to the online environment of the content stream based on the event instructions without requiring further action from the requesting client computing device, wherein automatically providing the requesting client computing device with the streamlined access includes initiating the set of event features within the online environment;
wherein the generated event instructions are further executable by the at least one requesting client computing device to set up a peripheral device for use during the active online event, and the selection of the start / launch option of the events interface triggers configuration of the peripheral device needed for the active online event via the generated event instructions.

11. The method of claim 10, further: comprising:
identifying one or more active online events available to each of the client computing devices; and
generating a customized list of the available active online events for a user of the at least one requesting client computing device, wherein the notification sent to the at least one client computing device is based on the corresponding customized list.

12. The method of claim 11, wherein generating the customized list is based on one or more indicators of interest from the user.

13. The method of claim 12, wherein the indicators of interest include at least one of registration by the user to indicate an intention to participate with respect to the active online event, participation by one or more designated friends or team members, and one or more designated titles of interest.

14. The method of claim 13, wherein each active online event in the customized list is associated with a link for the streamlined access, and wherein launching the online environment is based on user selection of the associated link for the active online event.

15. The method of claim 13, further comprising generating a calendar display based on the customized list, wherein the calendar display indicates an activity status of each active online event on the customized list.

16. The method of claim 10, wherein automatically providing the requesting client computing device with the streamlined access to the online environment includes placing a point of view associated with a user of the at least one client computing device at a specified location within the online environment.

17. The method of claim 10, wherein automatically providing the requesting client computing device with streamlined access to the online environment is further based on one or more designated friends or team members with whom a user of the client computing device wishes to interact in the online environment.

18. The method of claim 10, wherein the online event is a videoconference call, and wherein the generated event instructions are further executable by the at least one requesting client computing device to set up a group chat associated with the videoconference call.

19. A non-transitory, computer-readable storage medium, having embodied thereon a program executable by a processor to perform a method for providing an interactive events platform, the method comprising:
hosting, at a game server (610), an active online event, the active online event being an in-game event and being associated with a content stream;
storing information in memory regarding an active online event, the stored information including a set of one or more event features associated with participation in the active online event;
receiving in-game event information from the game server, wherein the in-game event information includes instructions for customizing in-game event access based on user information;
sending a notification comprising the in-game information over a communication network to a plurality of client computing devices (620) regarding the active online event, wherein the in-game event information appears on an events interface of the plurality of client computing devices;
receiving, in response to selection of a start / launch option of the events interface, a request from at least one of the client computing devices regarding access to participate in the active online event;
generating event instructions for the at least one requesting client computing device based on the set of event features associated with participation in the active online event, wherein execution of the event instructions by the requesting client computing device configures the requesting client computing device for streamlined access to active online event in accordance with the associated set of event features;
launching an online environment of the content stream associated with the online event, the online environment corresponding to the set of event features associated with participation in the active online event; and
automatically providing the requesting client computing device with the streamlined access to the online environment of the content stream based on the event instructions without requiring further action from the requesting client computing device, wherein automatically providing the requesting client computing device with the streamlined access includes initiating the set of event features within the online environment;
wherein the generated event instructions are further executable by the at least one requesting client computing device to set up a peripheral device for use during the active online event, and the selection of the start / launch option of the events interface triggers configuration of the peripheral device needed for the active online event via the generated event instructions.

## Patentansprüche

1. System (600) zum Bereitstellen einer interaktiven Ereignisplattform, das System umfassend:
einen Spielserver (610), der ein aktives Online-Ereignis hostet, wobei das aktive Online-Ereignis ein spielinternes Ereignis ist, und mit einem Inhaltsstrom verknüpft ist;
einen Speicher, der Informationen bezüglich des aktiven Online-Ereignisses speichert, wobei die gespeicherten Informationen einen Satz von einem oder mehreren Ereignismerkmalen einschließen, die mit der Teilnahme an dem aktiven Online-Ereignis verknüpft sind;
eine Kommunikationsschnittstelle, die über ein Kommunikationsnetzwerk kommuniziert, wobei die Kommunikationsschnittstelle:
In-Game-Ereignisinformationen von dem Spieleserver empfängt, wobei die In-Game-Ereignisinformationen Anweisungen zum Individualisieren des In-Game-Ereigniszugriffs basierend auf Benutzerinformationen einschließen;
eine Benachrichtigung, umfassend die In-Game-Ereignisinformationen, an eine Vielzahl von Client-Rechenvorrichtungen bezüglich des aktiven Online-Ereignisses sendet, wobei die In-Game-Ereignisinformationen auf einer Ereignisschnittstelle der Vielzahl von Client-Rechenvorrichtungen erscheinen, und
als Reaktion auf eine Auswahl einer Start-/Inbetriebnahmeoption der Ereignisschnittstelle, eine Anforderung von mindestens einer der Client-Rechenvorrichtungen bezüglich eines Zugriffs, um an dem aktiven Online-Ereignis teilzunehmen, sendet, und
einen Prozessor, der im Speicher gespeicherte Anweisungen ausführt, wobei die Ausführung der Anweisungen durch den Prozessor:
Ereignisanweisungen für die mindestens eine anfordernde Client-Rechenvorrichtung basierend auf dem Satz von Ereignismerkmalen, die mit der Teilnahme an dem aktiven Online-Ereignis verknüpft sind, erzeugt, wobei die Ausführung der Ereignisanweisungen durch die anfordernde Client-Rechenvorrichtung die anfordernde Client-Rechenvorrichtung für einen optimierten Zugriff auf das aktive Online-Ereignis gemäß dem verknüpften Satz von Ereignismerkmalen konfiguriert;
eine Online-Umgebung des Inhaltsstroms, die mit dem aktiven Online-Ereignis verknüpft ist, in Betrieb nimmt, wobei die Online-Umgebung dem Satz von Ereignismerkmalen entspricht, die mit der Teilnahme an dem aktiven Online-Ereignis verknüpft sind; und
der anfordernden Client-Rechenvorrichtung den optimierten Zugriff auf die Online-Umgebung des Inhaltsstroms basierend auf den Ereignisanweisungen und In-Game-Ereignisinformationen automatisch bereitstellt, ohne eine weitere Aktion von der anfordernden Client-Rechenvorrichtung zu erfordern, wobei das automatische Bereitstellen des optimierten Zugriffs an die anfordernde Client-Rechenvorrichtung das Initiieren des Satzes von Ereignismerkmalen innerhalb der Online-Umgebung umfasst;
wobei die erzeugten Ereignisanweisungen ferner durch die mindestens eine anfordernde Client-Rechenvorrichtung ausführbar sind, um eine Peripherievorrichtung zur Verwendung während des aktiven Online-Ereignisses einzurichten, und die Auswahl der Start-/Inbetriebnahmeoption der Ereignisschnittstelle die Konfiguration der für das aktive Online-Ereignis benötigten Peripherievorrichtung über die erzeugten Ereignisanweisungen auslöst.

2. System nach Anspruch 1, wobei der Prozessor ferner:
ein oder mehrere aktive Online-Ereignisse, die jeder der Client-Rechenvorrichtungen zur Verfügung stehen, identifiziert; und
eine individualisierte Liste der verfügbaren aktiven Online-Ereignisse für einen Benutzer der mindestens einen anfordernden Client-Rechenvorrichtung erzeugt, wobei die an die mindestens eine Client-Rechenvorrichtung gesendete Benachrichtigung auf der entsprechenden individualisierten Liste basiert.

3. System nach Anspruch 2, wobei der Prozessor die individualisierte Liste basierend auf einem oder mehreren Interessenindikatoren des Benutzers erzeugt.

4. System nach Anspruch 3, wobei die Interessenindikatoren mindestens eines von einer Registrierung durch den Benutzer, um eine Teilnahmeabsicht in Bezug auf das aktive Online-Ereignis anzugeben, einer Teilnahme durch einen oder mehrere designierte Freunde oder Teammitglieder und einem oder mehreren designierten Titeln von Interesse einschließen.

5. System nach Anspruch 2, wobei jedes aktive Online-Ereignis in der individualisierten Liste mit einem Link für den optimierten Zugriff verknüpft ist, und wobei der Prozessor die Online-Umgebung basierend auf einer Benutzerauswahl des verknüpften Links für das aktive Online-Ereignis in Betrieb nimmt.

6. System nach Anspruch 2, wobei der Prozessor ferner basierend auf der individualisierten Liste eine Kalenderanzeige erzeugt, wobei die Kalenderanzeige einen Aktivitätsstatus jedes aktiven Online-Ereignisses auf der individualisierten Liste angibt.

7. System nach Anspruch 1, wobei der Prozessor der anfragenden Client-Rechenvorrichtung den optimierten Zugriff auf die Online-Umgebung automatisch bereitstellt, durch Platzieren eines Blickpunkts, der mit einem Benutzer der mindestens einen Client-Rechenvorrichtung verknüpft ist, an einer spezifizierten Stelle innerhalb der Online-Umgebung.

8. System nach Anspruch 1, wobei der Prozessor der anfragenden Client-Rechenvorrichtung einen optimierten Zugriff zu der Online-Umgebung ferner basierend auf einem oder mehreren designierten Freunden oder Teammitgliedern automatisch bereitstellt, mit denen ein Benutzer der Client-Rechenvorrichtung in der Online-Umgebung interagieren möchte.

9. System nach Anspruch 1, wobei das aktive Online-Ereignis ein Videokonferenzanruf ist, und wobei die erzeugten Ereignisanweisungen ferner durch die mindestens eine anfordernde Client-Rechenvorrichtung ausführbar sind, um einen mit dem Videokonferenzanruf verknüpften Gruppenchat einzurichten.

10. Verfahren zum Bereitstellen einer interaktiven Ereignisplattform, das Verfahren umfassend:
Hosten, an einem Spieleserver (610), eines aktiven Online-Ereignisses, wobei das aktive Online-Ereignis ein In-Game-Ereignis ist, und mit einem Inhaltsstrom verknüpft ist;
Speichern von Informationen in einem Speicher bezüglich des aktiven Online-Ereignisses, wobei die gespeicherten Informationen einen Satz aus einem oder mehreren Ereignismerkmalen einschließen, die mit der Teilnahme an dem aktiven Online-Ereignis verknüpft sind;
Empfangen von In-Game-Ereignisinformationen von dem Spielserver, wobei die In-Game-Ereignisinformationen Anweisungen zum Individualisieren des In-Game-Ereigniszugriffs basierend auf Benutzerinformationen einschließen;
Senden einer Benachrichtigung, umfassend die In-Game-Informationen, über ein Kommunikationsnetzwerk an eine Vielzahl von Client-Rechenvorrichtungen (620) bezüglich des aktiven Online-Ereignisses, wobei die In-Game-Ereignisinformationen auf einer Ereignisschnittstelle der Vielzahl von Client-Rechenvorrichtungen erscheinen;
Empfangen, als Reaktion auf eine Auswahl einer Start-/Inbetriebnahmeoption der Ereignisschnittstelle, einer Anforderung von mindestens einer der Client-Rechenvorrichtungen bezüglich eines Zugriffs, um an dem aktiven Online-Ereignis teilzunehmen; und
Ausführen von im Speicher gespeicherter Anweisungen, wobei die Ausführung der Anweisungen durch einen Prozessor:
Ereignisanweisungen für die mindestens eine anfordernde Client-Rechenvorrichtung basierend auf dem Satz von Ereignismerkmalen erzeugt, die mit der Teilnahme an dem aktiven Online-Ereignis verknüpft sind, wobei die Ausführung der Ereignisanweisungen durch die anfordernde Client-Rechenvorrichtung die anfordernde Client-Rechenvorrichtung für einen optimierten Zugriff auf das aktive Online-Ereignis in Übereinstimmung mit dem verknüpften Satz von Ereignismerkmalen konfiguriert,
eine Online-Umgebung des Inhaltsstroms, die mit dem aktiven Online-Ereignis verknüpft ist, in Betrieb nimmt, wobei die Online-Umgebung dem Satz von Ereignismerkmalen entspricht, die mit der Teilnahme an dem aktiven Online-Ereignis verknüpft sind, und
der anfordernden Client-Rechenvorrichtung den optimierten Zugriff auf die Online-Umgebung des Inhaltsstroms basierend auf den Ereignisanweisungen automatisch bereitstellt, ohne eine weitere Aktion von der anfordernden Client-Rechenvorrichtung zu erfordern, wobei das automatische Bereitstellen des optimierten Zugriffs an die anfordernde Client-Rechenvorrichtung das Initiieren des Satzes von Ereignismerkmalen innerhalb der Online-Umgebung umfasst;
wobei die erzeugten Ereignisanweisungen ferner durch die mindestens eine anfordernde Client-Rechenvorrichtung ausführbar sind, um eine Peripherievorrichtung zur Verwendung während des aktiven Online-Ereignisses einzurichten, und die Auswahl der Start-/Inbetriebnahmeoption der Ereignisschnittstelle die Konfiguration der für das aktive Online-Ereignis benötigten Peripherievorrichtung über die erzeugten Ereignisanweisungen auslöst.

11. Verfahren nach Anspruch 10, ferner umfassend:
Identifizieren eines oder mehrerer aktiver Online-Ereignisse, die für jede der Client-Rechenvorrichtungen verfügbar sind; und
Erzeugen einer individualisierten Liste der verfügbaren aktiven Online-Ereignisse für einen Benutzer der mindestens einen anfordernden Client-Rechenvorrichtung, wobei die an die mindestens eine Client-Rechenvorrichtung gesendete Benachrichtigung auf der entsprechenden individualisierten Liste basiert.

12. Verfahren nach Anspruch 11, wobei das Erzeugen der individualisierten Liste auf einem oder mehreren Interessenindikatoren des Benutzers basiert.

13. Verfahren nach Anspruch 12, wobei die Interessenindikatoren mindestens eines von einer Registrierung durch den Benutzer, um eine Teilnahmeabsicht in Bezug auf das aktive Online-Ereignis anzugeben, einer Teilnahme durch einen oder mehrere designierte Freunde oder Teammitglieder und einem oder mehreren designierten Titeln von Interesse einschließen.

14. Verfahren nach Anspruch 13, wobei jedes aktive Online-Ereignis in der individualisierten Liste mit einem Link für den optimierten Zugriff verknüpft ist, und wobei das Inbetriebnehmen der Online-Umgebung auf einer Benutzerauswahl des verknüpften Links für das aktive Online-Ereignis basiert.

15. Verfahren nach Anspruch 13, ferner umfassend das Erzeugen einer Kalenderanzeige basierend auf der individualisierten Liste, wobei die Kalenderanzeige einen Aktivitätsstatus jedes aktiven Online-Ereignisses auf der individualisierten Liste angibt.

16. Verfahren nach Anspruch 10, wobei das automatische Bereitstellen des optimierten Zugriffs auf die Online-Umgebung für die anfordernde Client-Rechenvorrichtung das Platzieren eines Blickpunkts, der mit einem Benutzer der mindestens einen Client-Rechenvorrichtung verknüpft ist, an einer spezifizierten Stelle innerhalb der Online-Umgebung einschließt.

17. Verfahren nach Anspruch 10, wobei das automatische Bereitstellen eines optimierten Zugriffs auf die Online-Umgebung für die anfordernde Client-Rechenvorrichtung ferner auf einem oder mehreren designierten Freunden oder Teammitgliedern basiert, mit denen ein Benutzer der Client-Rechenvorrichtung in der Online-Umgebung interagieren möchte.

18. Verfahren nach Anspruch 10, wobei das Online-Ereignis ein Videokonferenzanruf ist, und wobei die erzeugten Ereignisanweisungen ferner durch die mindestens eine anfordernde Client-Rechenvorrichtung ausführbar sind, um einen mit dem Videokonferenzanruf verknüpften Gruppenchat einzurichten.

19. Nicht transitorisches, computerlesbares Speicherungsmedium, das ein darauf verkörpertes Programm aufweist, das durch einen Prozessor ausführbar ist, um ein Verfahren zum Bereitstellen einer interaktiven Ereignisplattform durchzuführen, das Verfahren umfassend:
Hosten, an einem Spieleserver (610), eines aktiven Online-Ereignisses, wobei das aktive Online-Ereignis ein In-Game-Ereignis ist, und mit einem Inhaltsstrom verknüpft ist;
Speichern von Informationen in einem Speicher bezüglich eines aktiven Online-Ereignisses, wobei die gespeicherten Informationen einen Satz von einem oder mehreren Ereignismerkmalen einschließen, die mit der Teilnahme an dem aktiven Online-Ereignis verknüpft sind;
Empfangen von In-Game-Ereignisinformationen von dem Spielserver, wobei die In-Game-Ereignisinformationen Anweisungen zum Individualisieren des In-Game-Ereigniszugriffs basierend auf Benutzerinformationen einschließen;
Senden einer Benachrichtigung, umfassend die In-Game-Informationen, über ein Kommunikationsnetzwerk an eine Vielzahl von Client-Rechenvorrichtungen (620) bezüglich des aktiven Online-Ereignisses, wobei die In-Game-Ereignisinformationen auf einer Ereignisschnittstelle der Vielzahl von Client-Rechenvorrichtungen erscheinen;
Empfangen, als Reaktion auf eine Auswahl einer Start-/Inbetriebnahmeoption der Ereignisschnittstelle, einer Anforderung von mindestens einer der Client-Rechenvorrichtungen bezüglich eines Zugriffs, um an dem aktiven Online-Ereignis teilzunehmen;
Erzeugen von Ereignisanweisungen für die mindestens eine anfordernde Client-Rechenvorrichtung basierend auf dem Satz von Ereignismerkmalen, die mit der Teilnahme an dem aktiven Online-Ereignis verknüpft sind, wobei die Ausführung der Ereignisanweisungen durch die anfordernde Client-Rechenvorrichtung die anfordernde Client-Rechenvorrichtung für einen optimierten Zugriff auf ein aktives Online-Ereignis gemäß dem verknüpften Satz von Ereignismerkmalen konfiguriert;
Inbetriebnehmen einer Online-Umgebung des Inhaltsstroms, der mit dem Online-Ereignis verknüpft ist, wobei die Online-Umgebung dem Satz von Ereignismerkmalen entspricht, die mit der Teilnahme an dem aktiven Online-Ereignis verknüpft sind; und
automatisches Bereitstellen des optimierten Zugriffs an die Online-Umgebung des Inhaltsstroms für die anfordernde Client-Rechenvorrichtung basierend auf den Ereignisanweisungen ohne Erfordern einer weiteren Aktion von der anfordernden Client-Rechenvorrichtung, wobei das automatische Bereitstellen des optimierten Zugriffs an die anfordernde Client-Rechenvorrichtung das Initiieren des Satzes von Ereignismerkmalen innerhalb der Online-Umgebung einschließt;
wobei die erzeugten Ereignisanweisungen ferner durch die mindestens eine anfordernde Client-Rechenvorrichtung ausführbar sind, um eine Peripherievorrichtung zur Verwendung während des aktiven Online-Ereignisses einzurichten, und die Auswahl der Start-/Inbetriebnahmeoption der Ereignisschnittstelle die Konfiguration der für das aktive Online-Ereignis benötigten Peripherievorrichtung über die erzeugten Ereignisanweisungen auslöst.

## Revendications

1. Système (600) permettant de fournir une plate-forme d'événements interactive, le système comprenant :
un serveur de jeu (610) qui héberge un événement en ligne actif, l'événement en ligne actif étant un événement interne au jeu et étant associé à un flux de contenu ;
de la mémoire qui stocke des informations concernant l'événement en ligne actif, les informations stockées comportant un ensemble d'une ou plusieurs caractéristiques d'événement associées à une participation à l'événement en ligne actif ;
une interface de communication qui communique sur un réseau de communication, dans lequel l'interface de communication :
reçoit des informations d'événement interne au jeu en provenance du serveur de jeu, dans lequel les informations d'événement interne au jeu comportent des instructions permettant de personnaliser un accès à un événement interne au jeu en fonction d'informations utilisateur ;
envoie une notification comprenant les informations d'événement interne au jeu à une pluralité de dispositifs informatiques clients concernant l'événement en ligne actif, dans lequel les informations d'événement interne au jeu apparaissent sur une interface d'événements de la pluralité de dispositifs informatiques clients, et
reçoit, en réponse à une sélection d'une option de démarrage / lancement de l'interface d'événements, une demande en provenance d'au moins l'un des dispositifs informatiques clients concernant un accès pour participer à l'événement en ligne actif, et
un processeur qui exécute les instructions stockées en mémoire, dans lequel l'exécution des instructions par le processeur :
génère des instructions d'événement pour l'au moins un dispositif informatique client demandeur en fonction de l'ensemble de caractéristiques d'événement associé à une participation à l'événement en ligne actif, dans lequel une exécution des instructions d'événement par le dispositif informatique client demandeur configure le dispositif informatique client demandeur pour un accès simplifié à l'événement en ligne actif conformément à l'ensemble associé de caractéristiques d'événement ;
lance un environnement en ligne du flux de contenu associé à l'événement en ligne actif, l'environnement en ligne correspondant à l'ensemble de caractéristiques d'événement associé à une participation à l'événement en ligne actif ; et
fournit automatiquement au dispositif informatique client demandeur l'accès simplifié à l'environnement en ligne du flux de contenu en fonction des instructions d'événement et d'informations d'événement interne au jeu sans exiger d'action supplémentaire de la part du dispositif informatique client demandeur, dans lequel la fourniture automatique au dispositif informatique client demandeur de l'accès simplifié comporte l'initiation de l'ensemble de caractéristiques d'événement au sein de l'environnement en ligne ;
dans lequel les instructions d'événement générées sont en outre exécutables par l'au moins un dispositif informatique client demandeur pour préparer un dispositif périphérique pour une utilisation pendant l'événement en ligne actif, et la sélection de l'option de démarrage / lancement de l'interface d'événements déclenche la configuration du dispositif périphérique nécessaire pour l'événement en ligne actif par l'intermédiaire des instructions d'événement générées.

2. Système selon la revendication 1, dans lequel le processeur, en outre :
identifie un ou plusieurs événements en ligne actifs à la disposition de chacun des dispositifs informatiques clients ; et
génère une liste personnalisée des événements en ligne actifs à la disposition d'un utilisateur de l'au moins un dispositif informatique client demandeur, dans lequel la notification envoyée à l'au moins un dispositif informatique client est en fonction de la liste personnalisée correspondante.

3. Système selon la revendication 2, dans lequel le processeur génère la liste personnalisée en fonction d'un ou plusieurs indicateurs d'intérêt provenant de l'utilisateur.

4. Système selon la revendication 3, dans lequel les indicateurs d'intérêt comportent au moins l'un parmi une inscription par l'utilisateur pour indiquer une intention de participer par rapport à l'événement en ligne actif, une participation par un ou plusieurs amis ou membres d'équipe désignés, et un ou plusieurs titres d'intérêt désignés.

5. Système selon la revendication 2, dans lequel chaque événement en ligne actif dans la liste personnalisée est associé à un lien pour l'accès simplifié, et dans lequel le processeur lance l'environnement en ligne en fonction d'une sélection utilisateur du lien associé pour l'événement en ligne actif.

6. Système selon la revendication 2, dans lequel le processeur génère en outre un affichage de calendrier en fonction de la liste personnalisée, dans lequel l'affichage de calendrier indique un statut d'activité de chaque événement en ligne actif sur la liste personnalisée.

7. Système selon la revendication 1, dans lequel le processeur fournit automatiquement au dispositif informatique client demandeur l'accès simplifié à l'environnement en ligne en plaçant un point de vue associé à un utilisateur de l'au moins un dispositif informatique client au niveau d'une localisation spécifiée au sein de l'environnement en ligne.

8. Système selon la revendication 1, dans lequel le processeur fournit automatiquement au dispositif informatique client demandeur un accès simplifié à l'environnement en ligne en fonction en outre d'un ou plusieurs amis ou membres d'équipe désignés avec lesquels un utilisateur du dispositif informatique client souhaite interagir dans l'environnement en ligne.

9. Système selon la revendication 1, dans lequel l'événement en ligne actif est un appel de vidéoconférence, et dans lequel les instructions d'événement générées sont en outre exécutables par l'au moins un dispositif informatique client demandeur pour préparer une conversation de groupe associée à l'appel de vidéoconférence.

10. Procédé permettant de fournir une plate-forme d'événements interactive, le procédé comprenant :
l'hébergement, au niveau d'un serveur de jeu (610), d'un événement en ligne actif, l'événement en ligne actif étant un événement interne au jeu et étant associé à un flux de contenu ;
le stockage d'informations en mémoire concernant l'événement en ligne actif, les informations stockées comportant un ensemble d'une ou plusieurs caractéristiques d'événement associées à une participation à l'événement en ligne actif ;
la réception d'informations d'événement interne au jeu en provenance du serveur de jeu, dans lequel les informations d'événement interne au jeu comportent des instructions permettant de personnaliser un accès à un événement interne au jeu en fonction d'informations utilisateur ;
l'envoi d'une notification comprenant les informations internes au jeu sur un réseau de communication à une pluralité de dispositifs informatiques clients (620) concernant l'événement en ligne actif, dans lequel les informations d'événement interne au jeu apparaissent sur une interface d'événements de la pluralité de dispositifs informatiques clients ;
la réception, en réponse à une sélection d'une option de démarrage / lancement de l'interface d'événements, d'une demande en provenance d'au moins l'un des dispositifs informatiques clients concernant un accès pour participer à l'événement en ligne actif ; et
l'exécution d'instructions stockées en mémoire, dans lequel l'exécution des instructions par un processeur :
génère des instructions d'événement pour l'au moins un dispositif informatique client demandeur en fonction de l'ensemble de caractéristiques d'événement associé à une participation à l'événement en ligne actif, dans lequel une exécution des instructions d'événement par le dispositif informatique client demandeur configure le dispositif informatique client demandeur pour un accès simplifié à l'événement en ligne actif conformément à l'ensemble associé de caractéristiques d'événement,
lance un environnement en ligne du flux de contenu associé à l'événement en ligne actif, l'environnement en ligne correspondant à l'ensemble de caractéristiques d'événement associé à une participation à l'événement en ligne actif, et
fournit automatiquement au dispositif informatique client demandeur l'accès simplifié à l'environnement en ligne du flux de contenu en fonction des instructions d'événement sans exiger d'action supplémentaire de la part du dispositif informatique client demandeur, dans lequel la fourniture automatique au dispositif informatique client demandeur de l'accès simplifié comporte l'initiation de l'ensemble de caractéristiques d'événement au sein de l'environnement en ligne ;
dans lequel les instructions d'événement générées sont en outre exécutables par l'au moins un dispositif informatique client demandeur pour préparer un dispositif périphérique pour une utilisation pendant l'événement en ligne actif, et la sélection de l'option de démarrage / lancement de l'interface d'événements déclenche la configuration du dispositif périphérique nécessaire pour l'événement en ligne actif par l'intermédiaire des instructions d'événement générées.

11. Procédé selon la revendication 10, comprenant en outre :
l'identification d'un ou plusieurs événements en ligne actifs à la disposition de chacun des dispositifs informatiques clients ; et
la génération d'une liste personnalisée des événements en ligne actifs à la disposition d'un utilisateur de l'au moins un dispositif informatique client demandeur, dans lequel la notification envoyée à l'au moins un dispositif informatique client est en fonction de la liste personnalisée correspondante.

12. Procédé selon la revendication 11, dans lequel la génération de la liste personnalisée est en fonction d'un ou plusieurs indicateurs d'intérêt provenant de l'utilisateur.

13. Procédé selon la revendication 12, dans lequel les indicateurs d'intérêt comportent au moins l'un parmi une inscription par l'utilisateur pour indiquer une intention de participer par rapport à l'événement en ligne actif, une participation par un ou plusieurs amis ou membres d'équipe désignés, et un ou plusieurs titres d'intérêt désignés.

14. Procédé selon la revendication 13, dans lequel chaque événement en ligne actif dans la liste personnalisée est associé à un lien pour l'accès simplifié, et dans lequel le lancement de l'environnement en ligne est en fonction d'une sélection utilisateur du lien associé pour l'événement en ligne actif.

15. Procédé selon la revendication 13, comprenant en outre la génération d'un affichage de calendrier en fonction de la liste personnalisée, dans lequel l'affichage de calendrier indique un statut d'activité de chaque événement en ligne actif sur la liste personnalisée.

16. Procédé selon la revendication 10, dans lequel la fourniture automatique au dispositif informatique client demandeur de l'accès simplifié à l'environnement en ligne comporte la mise en place d'un point de vue associé à un utilisateur de l'au moins un dispositif informatique client au niveau d'une localisation spécifiée au sein de l'environnement en ligne.

17. Procédé selon la revendication 10, dans lequel la fourniture automatique au dispositif informatique client demandeur d'un accès simplifié à l'environnement en ligne est en fonction en outre d'un ou plusieurs amis ou membres d'équipe désignés avec lesquels un utilisateur du dispositif informatique client souhaite interagir dans l'environnement en ligne.

18. Procédé selon la revendication 10, dans lequel l'événement en ligne est un appel de vidéoconférence, et dans lequel les instructions d'événement générées sont en outre exécutables par l'au moins un dispositif informatique client demandeur pour préparer une conversation de groupe associée à l'appel de vidéoconférence.

19. Support de stockage non transitoire lisible par ordinateur, sur lequel est incorporé un programme exécutable par un processeur pour mettre en œuvre un procédé permettant de fournir une plate-forme d'événements interactive, le procédé comprenant :
l'hébergement, au niveau d'un serveur de jeu (610), d'un événement en ligne actif, l'événement en ligne actif étant un événement interne au jeu et étant associé à un flux de contenu ;
le stockage d'informations en mémoire concernant un événement en ligne actif, les informations stockées comportant un ensemble d'une ou plusieurs caractéristiques d'événement associées à une participation à l'événement en ligne actif ;
la réception d'informations d'événement interne au jeu en provenance du serveur de jeu, dans lequel les informations d'événement interne au jeu comportent des instructions permettant de personnaliser un accès à un événement interne au jeu en fonction d'informations utilisateur ;
l'envoi d'une notification comprenant les informations internes au jeu sur un réseau de communication à une pluralité de dispositifs informatiques clients (620) concernant l'événement en ligne actif, dans lequel les informations d'événement interne au jeu apparaissent sur une interface d'événements de la pluralité de dispositifs informatiques clients ;
la réception, en réponse à une sélection d'une option de démarrage / lancement de l'interface d'événements, d'une demande en provenance d'au moins l'un des dispositifs informatiques clients concernant un accès pour participer à l'événement en ligne actif ;
la génération d'instructions d'événement pour l'au moins un dispositif informatique client demandeur en fonction de l'ensemble de caractéristiques d'événement associé à une participation à l'événement en ligne actif, dans lequel une exécution des instructions d'événement par le dispositif informatique client demandeur configure le dispositif informatique client demandeur pour un accès simplifié à l'événement en ligne actif conformément à l'ensemble associé de caractéristiques d'événement ;
le lancement d'un environnement en ligne du flux de contenu associé à l'événement en ligne, l'environnement en ligne correspondant à l'ensemble de caractéristiques d'événement associé à une participation à l'événement en ligne actif ; et
la fourniture automatique au dispositif informatique client demandeur de l'accès simplifié à l'environnement en ligne du flux de contenu en fonction des instructions d'événement sans exiger d'action supplémentaire de la part du dispositif informatique client demandeur, dans lequel la fourniture automatique au dispositif informatique client demandeur de l'accès simplifié comporte l'initiation de l'ensemble de caractéristiques d'événement au sein de l'environnement en ligne ;
dans lequel les instructions d'événement générées sont en outre exécutables par l'au moins un dispositif informatique client demandeur pour préparer un dispositif périphérique pour une utilisation pendant l'événement en ligne actif, et la sélection de l'option de démarrage / lancement de l'interface d'événements déclenche la configuration du dispositif périphérique nécessaire pour l'événement en ligne actif par l'intermédiaire des instructions d'événement générées.
